# EUROPEAN PATENT APPLICATION

(11) **EP 4 679 543 A1**
(43) Date of publication of application: **14.01.2026**
(21) Application number: 23925613.4
(22) Date of filing: 08.03.2023
(51) Int. Cl.: H01M 10/04, H01M 50/474, H01M 50/477, H01M 50/483, H01M 50/486

(54) **HOLDING MECHANISM FOR ELECTRODE LAMINATE**

(71) Applicant: Nissan Motor Co., Ltd., Kanagawa 221-0023 (JP)
(72) Inventor: SHIMODATE, Fumitaka, Atsugi-shi, Kanagawa 243-0123 (JP)
(74) Representative: Grünecker Patent- und Rechtsanwälte PartG mbB
(86) International application number: PCT/JP2023/008793
(87) International publication number: WO 2024/185075

(57) **Abstract**

A holding structure (1) for a laminated body (10) includes the laminated body (10) in which a plurality of electrodes are laminated, and a holder (40) that holds the laminated body (10) to fix the plurality of electrodes to one another. The holder (40) includes an upper cover (50) that covers an upper surface (10a) of the laminated body (10) and covers left and right side-surfaces (10c, 10d) of the laminated body (10), and a lower cover (60) that covers a lower surface (10b) of the laminated body (10) and covers the left and right side-surfaces (10c, 10d) of the laminated body (10). The upper cover (50) and the lower cover (60) are joined together on the left and right side-surfaces (10c, 10d) of the laminated body (10).

## Description

### Technical Field

The present invention relates to a holding structure for an electrode laminate.

### Background Art

The all-solid-state battery includes an electrode laminate formed by alternately laminating an electrode layer and a solid electrolyte layer, and an exterior body that houses the electrode laminate (Patent Document 1).

### Prior Art Document

### Patent Document

Patent Document 1: JP 2021-119558 A

### Summary of Invention

### Problems to be Solved by Invention

When manufacturing such an all-solid-state battery, a process of sealing the electrode laminate in an exterior body, such as a laminate pack, is required. In this process, there is a problem in that, during transportation of the electrode laminate, the electrode layers and the solid electrolyte layers may shift, resulting in misalignment of the electrode layers and the solid electrolyte layers.

A problem to be solved by the present invention is to provide a holding structure for a laminated body that can suppress misalignment of electrodes in the laminated body.

### Means for Solving Problems

The present invention solves the above-described problems by joining a first cover that covers one end surface in the laminating direction of the laminated body and covers the side surfaces of the laminated body, to a second cover that covers the other end surface in the laminating direction of the laminated body and covers the side surfaces of the laminated body, on the side surfaces of the laminated body.

### Effects of Invention

According to the present invention, misalignment of electrodes in the laminated body can be suppressed.

### Brief Description of Drawings

FIG. 1 is an exploded perspective view illustrating an all-solid-state battery according to a first embodiment of the present invention.
FIG. 2 is an exploded perspective view illustrating a holding structure for a laminated body according to the first embodiment of the present invention.
FIG. 3A is a front view illustrating the holding structure for the laminated body according to the first embodiment of the present invention.
FIG. 3B is a left side view illustrating the holding structure for the laminated body according to the first embodiment of the present invention.
FIG. 4 is an exploded perspective view illustrating a first modification of a holder according to the embodiment of the present invention.
FIG. 5 is an exploded perspective view illustrating a second modification of the holder according to the embodiment of the present invention.

### Mode(s) for Carrying out the Invention

### [First Embodiment]

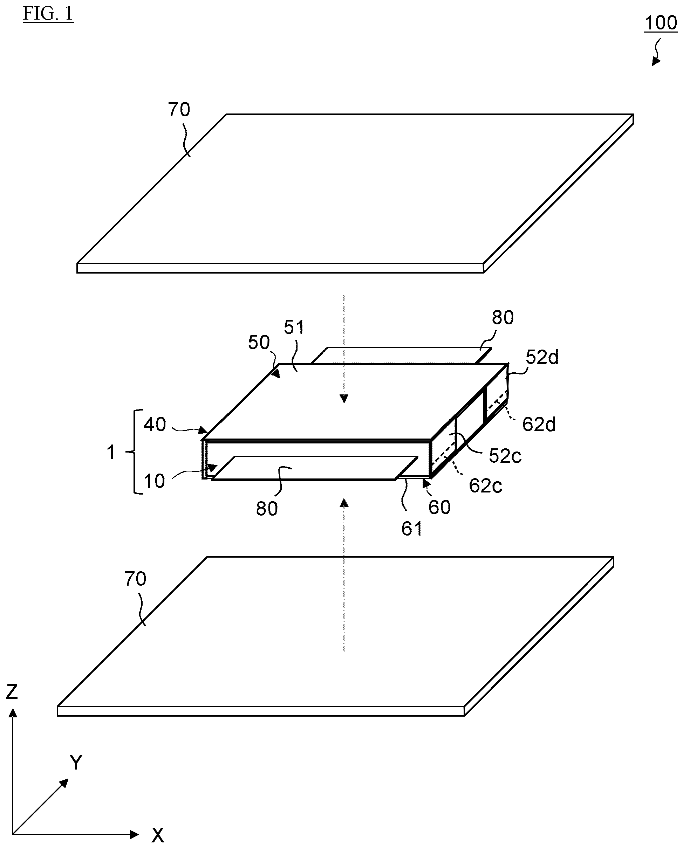

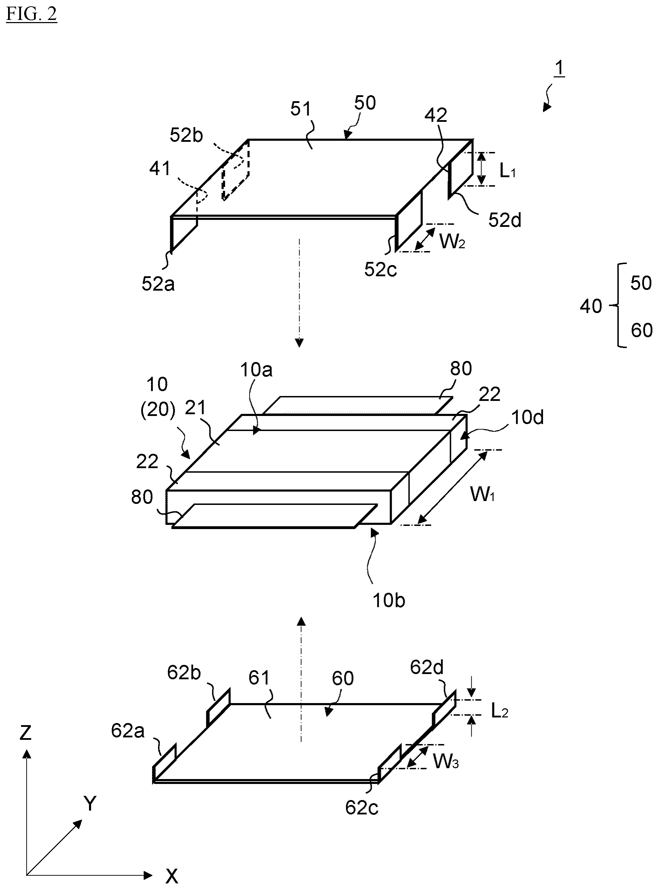

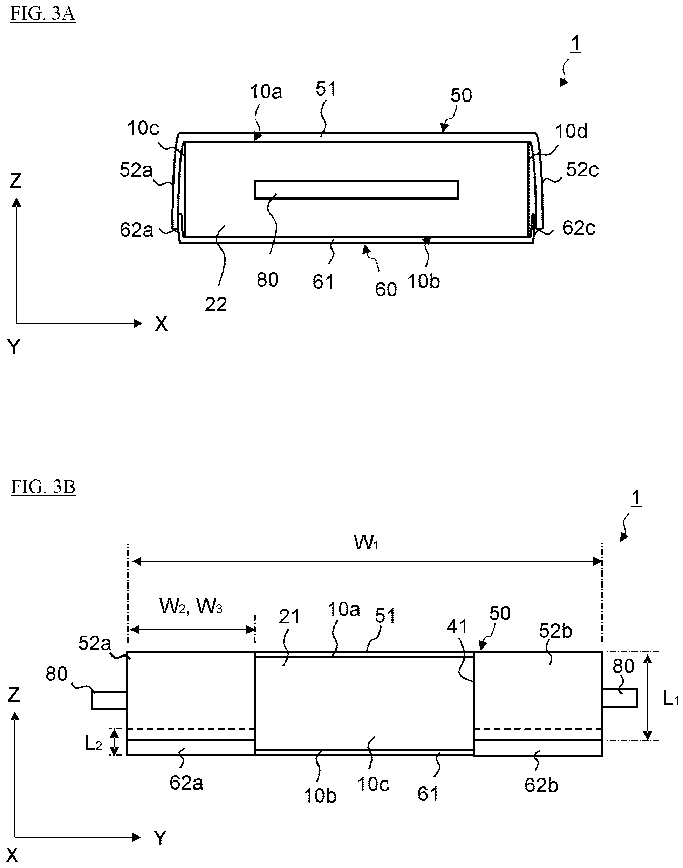

Hereinafter, embodiments for carrying out the present invention will be described with reference to the drawings. FIG. 1 is an exploded perspective view illustrating an all-solid-state battery 100 according to a first embodiment, and FIG. 2 is an exploded perspective view illustrating a holding structure 1 for a laminated body 10 according to the first embodiment. FIG. 3A is a front view illustrating the holding structure 1 for the laminated body 10 according to the first embodiment, and FIG. 3B is a left side view illustrating the holding structure 1 for the laminated body 10 according to the first embodiment.

As illustrated in FIG. **1****,** the all-solid-state battery (cell) 100 includes the holding structure 1, a pair of laminate films 70, 70, and a pair of tab leads 80, 80. The holding structure 1 is housed between the laminate films 70, 70 by being sandwiched from above and below by the laminate films 70, 70 as an exterior body. In this state, the tab leads 80, 80 extend to an outside from an interior of the exterior body.

As illustrated in FIG. **1****,** the holding structure 1 includes the laminated body 10 and a holder 40. The laminated body 10 is formed by laminating a plurality of plate-shaped members, and has a rectangular planar shape. As illustrated in FIG. 2, the laminated body 10 in the embodiment includes an electrode laminate 20.

The electrode laminate 20 includes a plurality of electrodes and a plurality of solid electrolytes. Although not specifically illustrated, in the electrode laminate 20, a positive electrode, a solid electrolyte layer, and a negative electrode may be alternately laminated. The positive electrode may include a positive electrode active material layer and a positive electrode current collector. The negative electrode may include a negative electrode active material layer and a negative electrode current collector. In the negative electrode, the negative electrode active material layer may be omitted. Alternatively, in the negative electrode, a lithium metal layer containing lithium metal as a main component may be provided instead of the negative electrode active material layer.

The electrode laminate 20 includes an electrode portion 21 and tab portions 22. The electrode portion 21 is a portion in which at least the positive electrode active material layer, the solid electrolyte layer, and the positive and negative electrode current collectors are located.

The tab portions 22 are formed on both end sides of the electrode portion 21. In the tab portions 22, the positive and negative electrode current collectors extending from the electrode portion 21 are located. In the tab portions 22, the plurality of current collectors are welded to the above-described tab leads 80 by welding or the like. It should be noted that the tab portion 22 may be formed only on one end side of the electrode portion 21. In other words, both the positive electrode current collector and the negative electrode current collector may extend from the one end side of the electrode portion 21.

The holder 40 restrains the laminated body 10 by covering a periphery of the laminated body 10, which is not particularly limited. More specifically, the holder 40 in the embodiment holds the laminated body 10 by pressing the laminated body 10 from above and below and sandwiching the laminated body 10 from the sides. As a result, the holder 40 fixes the positive electrode, the solid electrolyte layer, and the negative electrode mutually in the laminated body 10.

As illustrated in FIG. 2, the holder 40 includes an upper cover 50 and a lower cover 60. The upper cover 50 in the embodiment corresponds to one example of a "first cover" in the present invention, and the lower cover 60 in the embodiment corresponds to one example of a "second cover" in the present invention.

The upper cover 50 is composed of a resin film and covers the laminated body 10 from an upper surface 10a side of the laminated body 10. From the viewpoint of heat dissipation performance, the upper cover 50 is preferably composed of a resin film internally containing a metal filler. The metal filler is preferably dispersed in the resin film to maintain the insulating property of the resin film. The upper surface 10a in the embodiment corresponds to one example of "one end surface in a laminating direction of a laminated body" in the present invention.

The upper cover 50 includes an upper-surface covering portion 51 and a plurality (in this example, four) of upper side-surface covering portions 52a to 52d. The upper-surface covering portion 51 in the embodiment corresponds to one example of a "first end-surface covering portion" in the present invention, and the upper side-surface covering portions 52a to 52d in the embodiment correspond to one example of a "first side-surface covering portion" in the present invention.

The upper-surface covering portion 51 has a rectangular planar shape corresponding to the planar shape of the upper surface 10a of the laminated body 10. Therefore, as illustrated in FIG. 3A and FIG. 3B, the upper-surface covering portion 51 in the embodiment covers the upper surface 10a of the electrode portion 21 as well as the upper surface 10a of the tab portion 12. In other words, the upper-surface covering portion 51 covers the entire upper surface 10a. It should be noted that the upper-surface covering portion 51 does not necessarily have to cover the entire upper surface 10a and may cover only a part of the upper surface 10a. For example, only the upper surface of the electrode portion 21 may be covered, or a part of the upper surface of the electrode portion 21 may be covered.

As illustrated in FIG. 2, the four upper side-surface covering portions 52a to 52d are provided at the corners of the upper-surface covering portion 51. The upper side-surface covering portion 52a is a rectangular film and is provided at the front-left corner in the drawing of the upper-surface covering portion 51. As illustrated in FIG. 3A, the upper side-surface covering portion 52a extends downward from an edge of the upper-surface covering portion 51, and is overlapped and joined to a lower side-surface covering portion 62a, which will be described later.

In the embodiment, an inner surface of the upper side-surface covering portion 52a is joined to an outer surface of the lower side-surface covering portion 62a. The upper side-surface covering portion 52a and the lower side-surface covering portion 62a may be joined together using an adhesive or the like. In the embodiment, the inner surface of the upper side-surface covering portion 52a is joined to the outer surface of the lower side-surface covering portion 62a but the invention is not limited thereto, and an outer surface of the upper side-surface covering portion 52a may be joined to an inner surface of the lower side-surface covering portion 62a.

As illustrated in FIG. 3B, a width W₂ of the upper side-surface covering portion 52a in the embodiment is smaller than a width W₁ of a left side-surface 10c (W₂ < W₁). Accordingly, the upper side-surface covering portion 52a covers a front end portion of the left side-surface 10c of the left side-surface 10c of the laminated body 10. In addition, the upper side-surface covering portion 52a is in contact with at least a part of the left side-surface 10c of the laminated body 10. It should be noted that the entire upper side-surface covering portion 52a does not need to be in contact with the left side-surface 10c. In such a case, the entire upper side-surface covering portion 52a may be slightly spaced from the left side-surface 10c. Alternatively, only a portion of the upper side-surface covering portion 52a may be slightly spaced from the left side-surface 10c, while the remaining portion of the upper side-surface covering portion 52a may contact the left side-surface 10c.

As illustrated in FIG. 3B, the upper side-surface covering portion 52b is provided at a rear of the upper side-surface covering portion 52a (in the +Y-direction side in the drawing). The upper side-surface covering portion 52b is provided on the same side-surface (the left side-surface 10c) as the upper side-surface covering portion 52a. This upper side-surface covering portion 52b is provided at the rear-left corner in the drawing of the upper-surface covering portion 51, and is spaced from the upper side-surface covering portion 52a on the same side-surface.

The upper side-surface covering portion 52b is a film having the same shape as the upper side-surface covering portion 52a. This upper side-surface covering portion 52b also extends downward from an edge of the upper-surface covering portion 51, and is overlapped and joined to a lower side-surface covering portion 62b, which will be described later. It should be noted that the shape of the upper side-surface covering portion 52b may be different from that of the upper side-surface covering portion 52a.

An inner surface of the upper side-surface covering portion 52b is joined to an outer surface of the lower side-surface covering portion 62b. The upper side-surface covering portion 52b and the lower side-surface covering portion 62b may be joined together using an adhesive or the like, as with the upper side-surface covering portion 52a and the lower side-surface covering portion 62a. In the embodiment, the inner surface of the upper side-surface covering portion 52b is joined to the outer surface of the lower side-surface covering portion 62b but the invention is not limited thereto, and an outer surface of the upper side-surface covering portion 52b may be joined to an inner surface of the lower side-surface covering portion 62b.

In the embodiment, the upper side-surface covering portion 52b covers a rear end portion of the left side-surface 10c of the laminated body 10. This upper side-surface covering portion 52b is in contact with at least a part of the left side-surface 10c of the laminated body 10.

As illustrated in FIG. 2, the upper side-surface covering portion 52c is provided on the side opposite to the upper side-surface covering portion 52a, with the laminated body 10 interposed therebetween. The upper side-surface covering portion 52c is provided on a right side-surface 10d in an opposite side of the upper side-surface covering portion 52a. This upper side-surface covering portion 52c is provided at the front-right corner in the drawing of the upper-surface covering portion 51.

The upper side-surface covering portion 52c is a film having the same shape as the upper side-surface covering portion 52a. This upper side-surface covering portion 52c also extends downward from an edge of the upper-surface covering portion 51, and is overlapped and joined to a lower side-surface covering portion 62c, which will be described later. It should be noted that the shape of the upper side-surface covering portion 52c may be different from that of the upper side-surface covering portion 52a.

An inner surface of the upper side-surface covering portion 52c is joined to an outer surface of the lower side-surface covering portion 62c. The upper side-surface covering portion 52c and the lower side-surface covering portion 62c may be joined together using an adhesive or the like, as with the upper side-surface covering portion 52c and the lower side-surface covering portion 62c. In the embodiment, the inner surface of the upper side-surface covering portion 52c is joined to the outer surface of the lower side-surface covering portion 62c but the invention is not limited thereto, and an outer surface of the upper side-surface covering portion 52c may be joined to an inner surface of the lower side-surface covering portion 62c.

In the embodiment, the upper side-surface covering portion 52c covers a front end portion of the right side-surface 10d of the laminated body 10. This upper side-surface covering portion 52b is in contact with at least a part of the left side-surface 10c of the laminated body 10. It should be noted that the upper side-surface covering portion 52c may be slightly spaced from the right side-surface 10d.

The upper side-surface covering portion 52d is provided at a rear of the upper side-surface covering portion 52c. The upper side-surface covering portion 52d is provided on the same side-surface (the right side-surface 10d) as the upper side-surface covering portion 52c. This upper side-surface covering portion 52d is provided at the rear-right corner in the drawing of the upper-surface covering portion 51, and is spaced from the upper side-surface covering portion 52c on the same side-surface.

The upper side-surface covering portion 52d is a film having the same shape as the upper side-surface covering portion 52a. This upper side-surface covering portion 52d also extends downward from an edge of the upper-surface covering portion 51, and is overlapped and joined to a lower side-surface covering portion 62d, which will be described later. It should be noted that the shape of the upper side-surface covering portion 52d may be different from that of the upper side-surface covering portion 52a.

An inner surface of the upper side-surface covering portion 52d is joined to an outer surface of the lower side-surface covering portion 62d. The upper side-surface covering portion 52d and the lower side-surface covering portion 62d may be joined together using an adhesive or the like, as with the upper side-surface covering portion 52a and the lower side-surface covering portion 62a. In the embodiment, the inner surface of the upper side-surface covering portion 52d is joined to the outer surface of the lower side-surface covering portion 62d but the invention is not limited thereto, and an outer surface of the upper side-surface covering portion 52d may be joined to an inner surface of the lower side-surface covering portion 62d.

In the embodiment, the upper side-surface covering portion 52d covers a rear end portion of the right side-surface 10d of the laminated body 10. This upper side-surface covering portion 52d is in contact with at least a part of the right side-surface 10d of the laminated body 10.

As illustrated in FIG. 2, the lower cover 60 is also composed of a resin film, as with the upper cover 50, and covers the laminated body 10 from a lower surface 10b side of the laminated body 10. The lower cover 60 is also preferably a resin film internally containing a metal filler from the viewpoint of heat dissipation performance, as with the upper cover 50. The lower surface 10b in the embodiment corresponds to one example of "the other end surface in the laminating direction of the laminated body" in the present invention.

This lower cover 60 basically has a shape of the upper cover 50 inverted upside down and includes a lower-surface covering portion 61 and a plurality (in this example, four) of lower side-surface covering portions 62a to 62d. The lower-surface covering portion 61 in the embodiment corresponds to one example of a "second end-surface covering portion" in the present invention, and the lower side-surface covering portions 62a to 62d in the embodiment correspond to one example of a "second side-surface covering portion" in the present invention.

The lower-surface covering portion 61 has basically the same structure as the upper-surface covering portion 51. However, the lower-surface covering portion 61 covers the lower surface 10b of the electrode portion 21 as well as the lower surface 10b of the tab portion 12. It should be noted that, as with the upper-surface covering portion 51, the lower-surface covering portion 61 does not necessarily have to cover the entire lower surface 10b, and may cover only a part of the upper surface 10b.

The lower side-surface covering portions 62a to 62d basically have also the same configuration as the upper side-surface covering portions 52a to 52d. The lower side-surface covering portions 62a to 62d are provided at the four corners of the lower-surface covering portion 61, corresponding to the positions of the upper side-surface covering portions 52a to 52d. A width W₃ of the lower side-surface covering portions 62a to 62d is the same as the width W₂ of the upper side-surface covering portions 52a to 52d (W₃ = W₂ < W₁).

On the other hand, the lower side-surface covering portions 62a to 62d extend upward and are joined to the upper side-surface covering portions 52a to 52d. As illustrated in FIG. 2 and FIG. 3B, a length L₂ of the lower side-surface covering portions 62a to 62d in the laminating direction of the laminated body 10 (Z-direction in the drawing) differs from a length L₁ of the upper side-surface covering portions 52a to 52d in the same direction. In the embodiment, the length L₂ is shorter than the length L₁ (L₂ < L₁).

In the embodiment, a bonding force between the upper side-surface covering portions 52a to 52d and the lower side-surface covering portions 62a to 62d (the total bonding force at the four positions) is set to be smaller than an expansion force of the electrodes (the electrode laminate 20) generated when the laminated body 10 is charged in the all-solid-state battery 100. In other words, the embodiment is designed to allow the upper side-surface covering portions 52a to 52d to detach from the lower side-surface covering portions 62a to 62d when the laminated body 10 expands due to the charging of the laminated body 10. This makes it possible to suppress misalignment between the electrodes at the transportation of the laminated body 10, while also suppressing deformation of the end portions of the electrodes due to excessive pressure applied from the holder 40 to the laminated body 10 during expansion of the laminated body 10. It should be noted that while the bonding force described above is not particularly limited, the bonding force may be adjusted, for example, with the application area or thickness of the adhesive.

As illustrated in FIG. 3B, in the embodiment, on the left side-surface 10c of the laminated body 10, the upper side-surface covering portion 52a and the upper side-surface covering portion 52b are spaced from one another, and the lower side-surface covering portion 62a and the lower side-surface covering portion 62b are also spaced from one another. Accordingly, an opening 41 is formed in the left side-surface 10c, the opening 41 being defined by the upper side-surface covering portion 52a, the upper side-surface covering portion 52b, the lower side-surface covering portion 62a, the lower side-surface covering portion 62b, the upper-surface covering portion 51, and the lower-surface covering portion 61. Similarly, as illustrated in FIG. 2, an opening 42 is formed in the right side-surface 10d. These openings 41 and 42 allow the laminated body 10 to be exposed from the holder 40, thereby making it possible to enhance the heat dissipation performance of the holding structure 1 while suppressing the misalignment between the electrodes. In addition, since the upper side-surface covering portion 52a, the upper side-surface covering portion 52b, the lower side-surface covering portion 62a, and the lower side-surface covering portion 62b cover the front and rear end portions of the respective side-surfaces 10c and 10d, the misalignment between the electrodes can be effectively suppressed.

With the holding structure 1 in the embodiment as described above, by applying a pressure by the holder 40 from above and below the laminated body 10, the laminated body 10 can be fixed in a manner in which the electrodes do not move when transporting the laminated body 10 in a manufacturing process of the all-solid-state battery 100. That is, the vibration resistance of the laminated body 10 can be improved. In particular in the embodiment, since the holder presses not only the upper and lower surfaces 10a and 10b of the electrode portion 21 of the electrode laminate 20 but also the upper and lower surfaces 10a and 10b of the tab portions 22, occurrence of the misalignment of the electrodes can be further suppressed.

Furthermore, by covering the upper and lower surfaces 10a and 10b of the laminated body 10 with the holder 40, unevenness of the upper and lower surfaces 10a and 10b is absorbed, thereby allowing reduction of unevenness of the upper and lower surfaces of the holding structure 1. As a result, when pressure is applied to the laminated body 10 in the laminating direction in the all-solid-state battery 100, the pressure can be uniformly applied over the entire upper and lower surfaces 10a and 10b of the laminated body 10. In addition, by reducing such surface unevenness, it is also possible to reduce gaps formed between a plurality of all-solid-state batteries 100.

In addition, by shortening the length L₂ of the lower side-surface covering portions 62a to 62d, which are positioned on the inner side, as in the embodiment, it is possible to avoid the lower side-surface covering portions 62a to 62d entering between the upper surface 10a of the laminated body 10 and the upper side-surface covering portions 52a to 52d, even when a thin laminated body is covered with a resin film. Accordingly, the surface unevenness on the upper and lower surfaces of the holding structure 1 can be reduced.

In the embodiment, the upper side-surface covering portions 52a to 52d and the lower side-surface covering portions 62a to 62d are joined together on both the left and right side-surfaces 10c and 10d of the laminated body 10. When the upper side-surface covering portion and the lower side-surface covering portion are joined together on only one side-surface, it is necessary to lift the laminated body 10 before wrapping the laminated body 10 with the holder 40 during the process of fixing the laminated body 10 with the holder 40, and the misalignment of the electrodes possibly occurs also at this time. On the other hand, in the embodiment in which joining portions are provided on both the left and right side-surfaces 10c and 10d of the laminated body 10, it is only necessary to cover the laminated body 10 with the upper cover 50 from above the laminated body 10 in a state where the laminated body 10 is placed on the lower cover 60. Accordingly, even during the attachment operation of the holder 40, the misalignment of the electrodes in the laminated body 10 is less likely to occur. In addition, workability is improved, thereby enhancing the productivity of the holding structure 1.

Further, as in the embodiment, it is preferable that the upper-surface covering portion 51 covers the entire upper surface 10a of the electrode portion 21, and that the lower-surface covering portion 61 covers the entire lower surface 10b of the electrode portion 21. By doing so, it is possible to suppress the occurrence of non-uniform surface pressure applied to the electrode portion 21, thereby allowing uniform surface pressure to be applied. As a result, in the all-solid-state battery 100, it is possible to suppress the generation of resistance distribution caused by non-uniform surface pressure, and to suppress the non-uniform reaction.

In the embodiment, an example is illustrated in which the number of the upper side-surface covering portions and the number of the lower side-surface covering portions are each four. However, the number of upper side-surface covering portions is not particularly limited. For example, each of the number of upper side-surface covering portions and the number of lower side-surface covering portions may be one, and the entire left and right side-surfaces 10c and 10d may be covered.

### [Second Embodiment]

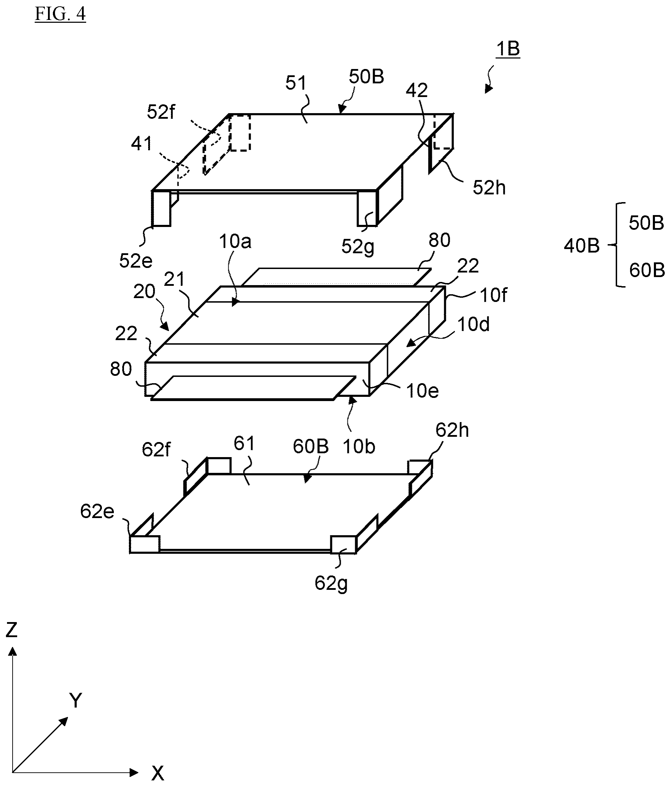

The following describes the second embodiment with reference to FIG 4. As illustrated in FIG. 4, a holding structure 1B of the embodiment differs from the holding structure 1 of the first embodiment in that the upper side-surface covering portions 52a to 52d and the lower side-surface covering portions 62a to 62d cover a front side-surface 10e and a rear side-surface 10f of the laminated body 10. However, the other components are the same as those in the above-described embodiment. Hereinafter, only the differences of the holding structure 1B in the second embodiment from the first embodiment will be described, and the same components as those in the first embodiment will be denoted by the same reference numerals, and the description thereof will be omitted.

In a holder 40B of the second embodiment, upper side-surface covering portions 52e to 52h of an upper cover 50B have an L-shape corresponding to the edges at the corners of the upper-surface covering portion 51. Similarly, lower side-surface covering portions 62e to 62h of a lower cover 60B have an L-shape corresponding to the edges at the corners of the lower-surface covering portion 61. The upper side-surface covering portions 52e to 52h and the lower side-surface covering portions 62e to 62h are joined to one another and cover not only the left and right side-surfaces 10c and 10d but also the front and rear side-surfaces 10e and 10f of the laminated body 10. The upper side-surface covering portions 52e to 52h and the lower side-surface covering portions 62e to 62h cover the vicinity of the ends of the front and rear side-surfaces 10e and 10f so as not to interfere with the tab leads 80.

With the holding structure 1B of the second embodiment as described above, since the front and rear side-surfaces 10e and 10f of the laminated body 10 are covered, it is possible to suppress misalignment of the electrodes in the laminated body 10 in the front-rear direction.

### [Third Embodiment]

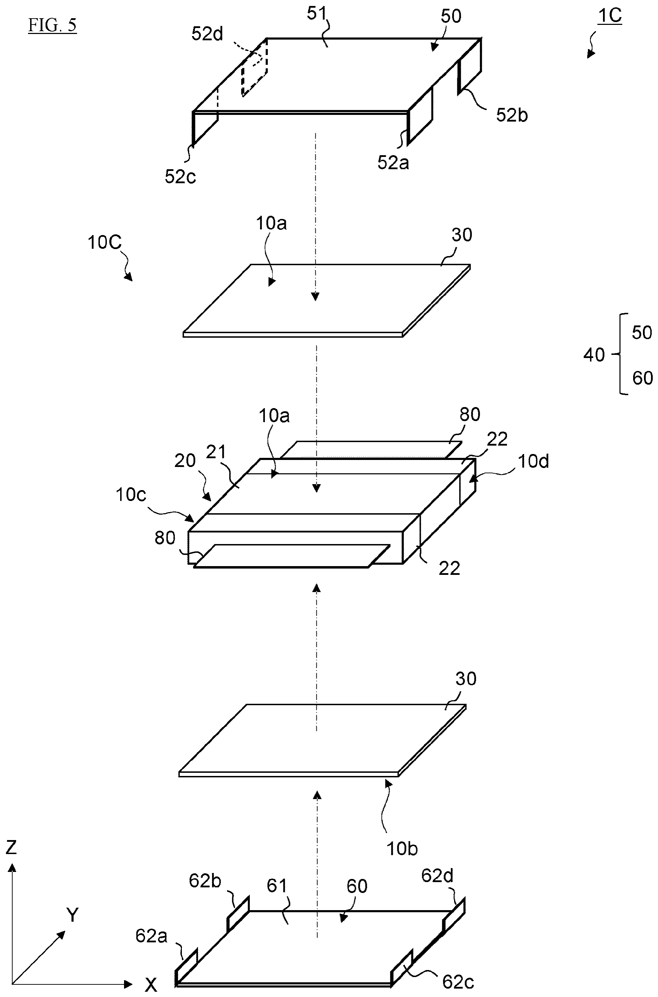

The following describes the third embodiment with reference to FIG 5. As illustrated in FIG. 5, a holding structure 1C of the embodiment differs from the holding structure 1 of the first embodiment in that a laminated body 10C includes a pair of reinforcing plates 30, 30. However, the other components are the same as those in the above-described embodiments. Hereinafter, only the differences of the holding structure 1C in the third embodiment from the first embodiment will be described, and the same components as those in the first embodiment will be denoted by the same reference numerals, and the description thereof will be omitted.

The laminated body 10C in the third embodiment includes the pair of reinforcing plates 30, 30 that sandwich the electrode laminate 20 from above and below. The reinforcing plates 30 are plate-shaped members for reinforcing the electrode laminate 20. Although not particularly limited, a metal plate made of stainless steel, aluminum, or the like may be used as the reinforcing plates 30. Alternatively, a resin plate member or the like may be used as the reinforcing plates 30, but it is preferable to use the metal plate in view of heat dissipation performance.

In the embodiment, the upper surface 10a of the laminated body 10C is an upper surface of the upper reinforcing plate 30, and the lower surface 10b of the laminated body 10C is a lower surface of the lower reinforcing plate 30. The side surfaces 10c to 10f of the laminated body 10C include the side surfaces of the electrode laminate 20 and the side surfaces of the pair of reinforcing plates 30.

In the embodiment, the laminated body 10C is pressed by the holder 40 at least from above and below. Since the thickness of the electrodes included in the electrode laminate 20 is relatively small, there is a possibility that the ends of the electrodes may warp due to the pressing. However, in the embodiment, the electrode laminate 20 is reinforced by the reinforcing plates 30, whereby the occurrence of warping in the electrode laminate 20 can be suppressed.

### Description of Reference Numerals

- 1: Holding structure
- 10: Laminated body
- 10a, 10b: Upper and lower surfaces
- 10c to 10f: Side surfaces
- 20: Electrode laminate
- 21: Electrode portion
- 22: Tab portion
- 30: Reinforcing plate
- 40: Holder
- 41, 42: Openings
- 50: Upper cover
- 51: Upper-surface covering portion
- 52a to 52d: Upper side-surface covering portions
- 60: Lower cover
- 61: Lower-surface covering portion
- 62a to 62d: Lower side-surface covering portions
- 100: All-solid-state battery (cell)
- 70: Laminate film
- 80: Tab lead

## Claims

1. A holding structure for a laminated body, comprising:
a laminated body in which electrodes are laminated; and
a holder that holds the laminated body to fix the electrodes to one another, wherein
the holder includes:
a first cover that covers one end surface in a laminating direction of the laminated body and covers a side surface of the laminated body; and
a second cover that covers the other end surface in the laminating direction of the laminated body and covers the side surface of the laminated body, and
the first cover and the second cover are joined together on the side surface of the laminated body.

2. The holding structure for a laminated body according to claim 1, wherein
the first cover includes:
a first end-surface covering portion that covers the one end surface; and
a first side-surface covering portion that covers the side surface of the laminated body,
the second cover includes:
a second end-surface covering portion that covers the other end surface; and
a second side-surface covering portion that covers the side surface of the laminated body and is joined to the first side-surface covering portion,
a width of the first side-surface covering portion is smaller than a width of the side surface, and
a width of the second side-surface covering portion is smaller than the width of the side surface.

3. The holding structure for a laminated body according to claim 2, wherein
the first cover includes a pair of the first side-surface covering portions that are located on the same side surface and spaced from one another,
the second cover includes a pair of the second side-surface covering portions that are located on the same side surface and correspond to the pair of first side-surface covering portions, and
openings are formed between one of the first side-surface covering portion and the second side-surface covering portion and the other of the first side-surface covering portion and the second side-surface covering portion.

4. The holding structure for a laminated body according to claim 1, wherein
the laminated body has a rectangular planar shape, and
a part of the first cover and a part of the second cover are joined together on a corner of the side surface of the laminated body and cover the corner.

5. The holding structure for a laminated body according to claim 1, wherein
the first cover further covers one end surface in the laminating direction of a tab portion of the laminated body, and
the second cover further covers the other end surface in the laminating direction of the tab portion of the laminated body.

6. The holding structure for a laminated body according to claim 1, wherein
the first cover and the second cover are made of a resin film internally containing a metal filler.

7. The holding structure for a laminated body according to claim 1, wherein
the laminated body includes a pair of reinforcing plates disposed at respective one end and the other end of the laminated body in the laminating direction.

8. The holding structure for a laminated body according to claim 1, wherein
a bonding force between a part of the first cover and a part of the second cover is smaller than an expansion force of the electrodes generated when the laminated body is charged.

9. The holding structure for a laminated body according to claim 1, wherein
the laminated body has:
a first side-surface; and
a second side-surface located at an opposite side of the first side-surface, and
the first cover and the second cover are joined together on the first side-surface and the second side-surface.

10. The holding structure for a laminated body according to claim 1, wherein
the first cover includes:
a first end-surface covering portion that covers the one end surface; and
a first side-surface covering portion that covers the side surface of the laminated body,
the second cover includes:
a second end-surface covering portion that covers the other end surface; and
a second side-surface covering portion that covers the side surface of the laminated body and is overlapped and joined to the first side-surface covering portion, and
a length of the first side-surface covering portion in the laminating direction differs from a length of the second side-surface covering portion in the laminating direction.
